Europäisches Patentamt

European Patent Office

Office européen des brevets

(11) Publication number: 0 383 046
A1

## EUROPEAN PATENT APPLICATION

(21) Application number: 90101118.9

(22) Date of filing: 19.01.90

(51) Int. Cl.5: F01D 5/18, F01D 11/00

(30) Priority: 15.02.89 US 310554

(43) Date of publication of application:
22.08.90 Bulletin 90/34

(84) Designated Contracting States:
CH DE FR GB IT LI NL SE

(71) Applicant: WESTINGHOUSE ELECTRIC
CORPORATION
Westinghouse Building Gateway Center
Pittsburgh Pennsylvania 15235(US)

(72) Inventor: North, William Edward
656 Cayuga Drive
Winter Springs, FL 32708(US)
Inventor: Entenmann, David Taylor
1767 Owasco Street
Winter Springs, FL 32708(US)
Inventor: Donlan John Paul
2357 Westminster Terrace
Oviedo, FL 32765(US)

(74) Representative: Fleuchaus, Leo, Dipl.-Ing. et al
Melchiorstrasse 42
D-8000 München 71(DE)

(54) Cooled turbine vane.

(57) A cooled turbine vane (18) in a multistage gas turbine (10) which is cooled with a fluid whose major portion is dissipated into the gas flow path (12) whereas a minor portion is supplied to a seal housing (48) and seal (50) for cooling the seal housing (48) has a hollow airfoil body (32) with an inlet (52) providing for flow communication with a source of coolant and an outlet (100) in the inner shroud (36) supplying coolant to a seal (50). The coolant in the airfoil body (82) flows through return bends (110, 120) wherein stagnancy is reduced by appropriate location of discharge ports (100 and 130).

FIG. 1

## COOLED TURBINE VANE

This invention relates to a fluid cooled turbine vane used in multistage gas turbines.

In modern multistage gas turbines, the first several rows of stationary vanes must be cooled with a fluid in order to maintain their structural capability. In these turbines, compressed air is taken from an extraction point on a compressor and supplied to cool the vanes and then is discharged. U.S. Patent No. 3,945,758, which is assigned to the assignee of the present invention, discloses a turbine having rows of stationary vanes radially extending from seal housings disposed about a rotor adjacent to rows of blades mounted on the rotor structure. Each vane in the later rows has a central elongated airfoil body disposed between an outer shroud attached to a casing and an inner shroud attached to a seal housing. Coolant fluid flows from a source of supply through passages and cavities into inlets in the outer shroud, radially inwardly through parallel channels in the airfoil body and outlets in the inner shroud and then into a chamber generally defined by the inner shroud and the seal housing. The coolant fluid in the chamber cooling the inner shroud and the seal housing then leaks into the hot gases flowing through the turbine around the inner shroud. A portion of the coolant fluid in the chamber leaks through clearance spaces between the seal and the rotor to protect the seal and rotor. U.S. Patent No. 4,684,322 discloses a different coolant system wherein the coolant fluid is discharged via ports in the airfoil body directly into the hot gases flowing through the turbine. In both of these types of coolant systems, the system is primarily designed to cool the vanes.

It is the principal object of the present invention to provide a cooled turbine vane having a coolant system for protecting the vane and a second coolant system for protecting the seal and its housing with improved overall efficiency.

With this object in view, the present invention resides in a cooled turbine vane for use in a multistage gas turbine having rows of fluid cooled vanes radially extending from seal housings into the path of gases flowing generally axially through the turbine, the cooled turbine vane having a hollow airfoil body with ports providing flow communication between its hollow interior and the gas flow path, an outer shroud with a coolant inlet into the interior of the airfoil body providing flow communication with a source of coolant fluid, and an inner shroud with a coolant fluid outlet from the interior of the airfoil body providing flow communication with a seal housing, so as to permit some coolant to flow from the vane through the ports directly into the gas flow path and some coolant to flow through the outlet in the inner shroud, characterized in that the airfoil body has in its interior a multipass coolant fluid channel comprising a first channel extending along the leading surfaces of the airfoil body from the inlet in the outer shroud to a return bend defined by the airfoil body and the inner shroud, and a subsequent channel in fluid flow communication with the first channel extending along the trailing surfaces of the airfoil body in fluid flow communication with the ports.

The coolant system is tailored so as to meet different coolant requirements providing for the lowest practical pressure drops for efficiently operating the turbine.

The invention will become more readily apparent from the following description of preferred embodiments thereof shown, by way of example only, in the accompanying drawings, wherein:

Figure 1 is a schematic longitudinal section of a portion of an axial flow multistage gas turbine showing an intermediate stage cooled turbine vane employing the present invention;

Figure 2 is a sectional view of a preferred embodiment of the cooled turbine vane generally shown in Figure 1; and

Figure 3 is a cross-sectional view of the airfoil body shown in Figure 2 taken along line 3-3.

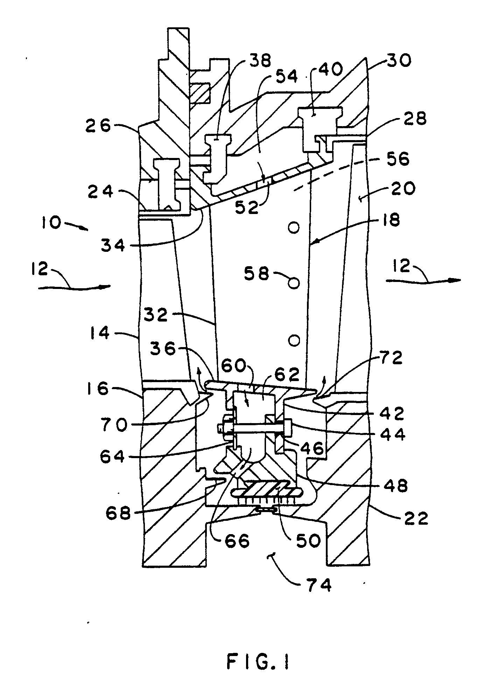

Figure 1 generally shows a vane structure for na intermediate stage of a gas turbine 10 such as the turbine of U.S. Patent No. 3,945,758. High temperature gases flow through the turbine 10 along an axial flow path as designated by arrows 12. The gases flow from an inlet section, through an upstream row of blades including blade 14 rotatably mounted on a turbine disc 16, through a row of stationary vanes including vane 18, through a downstream row of blades including blade 20 rotatably mounted on a turbine disc 22, and to an exhaust section. A ring segment 24 attached to a blade ring 26 disposed around the upstream row of blades and a ring segment 28 attached to a blade ring 30 disposed around the downstream row of blades prevents bypassing of gas around the blades.

The turbine vane 18 has an airfoil body 32 disposed between an outer shroud 34 and an inner shroud 36. The outer shroud 34 is fixedly attached to the blade ring 30 by isolation segments 38, 40. The inner shroud 36 has a root 42 to which a seal housing 48 is fastened by bolt 44 extending through bolt hole 46. The seal housing 48 supports a labyrinth seal 50 adjacent to the upstream and downstream turbine discs 16, 22.

The vane 18 is exposed to the hot combustion gases and, therefore, must be cooled with a fluid in order to maintain its structural integrity. Thus the outer shroud 34 has an inlet 52 in fluid flow communication with a source of coolant fluid such as an air compressor (not shown) via a cavity 54 defined by the blade ring 30, the outer shroud 34 and the isolation segments 38, 40. The coolant fluid flows into the interior 56 within the hollow airfoil body 32 where it absorbs heat from the vane. As is shown in Figure 1, the interior 56 may form one channel. The interior 56 may alternatively comprise two or more channels in series for controlling the coolant fluid flow within the hollow interior 56.

A major portion of the coolant fluid in the interior flows through one or more ports 58 in the airfoil body 32 and along its outer surfaces for shielding at least portions of the outer surfaces of the airfoil body 32 from direct contact by high temperature gases flowing along path 12. Thus a portion of the coolant fluid flows through the interior 56 of the airfoil body and along portions of its outer surfaces to protect the vane 18 from the high temperature gases.

A minor portion of the coolant in the interior 56 of the airfoil body 32 flows through an outlet 60 in the inner shroud 36 into a cavity 62 defined by the inner shroud 36, the seal housing 48 and a wall member 64 mounted on the seal housing 48. The coolant in cavity 62 cools the inner shroud 36 and seal housing and then leaks through a passageway 66 in the seal housing into the spaces around the upstream turbine disc 16. A portion of this coolant then leaks through a seal 68 between the upstream disc 16 and seal housing 48, through a seal 70 between the upstream blade 14 and the vane 18 and into the high temperature gas flow path 12. A second portion of this coolant leaks through the clearances between the labyrinth seal 50 and the turbine discs 16, 22 and then past a seal 72 between the vane 18 and the downstream blade 20. The coolant then disperses into the high temperature gas flow path 12. In addition there is a slight leakage of coolant (from another source) from cavity 74 through a seal between the turbine discs 16, 22 and into the coolant flowing through the labyrinth seal 50.

Thus only the necessary amount of coolant in the hollow interior 56 of the airfoil body 32 needed to cool the seal housing 48, need be supplied into the cavity 62 around the seal housing 48 and leaked through the seals.

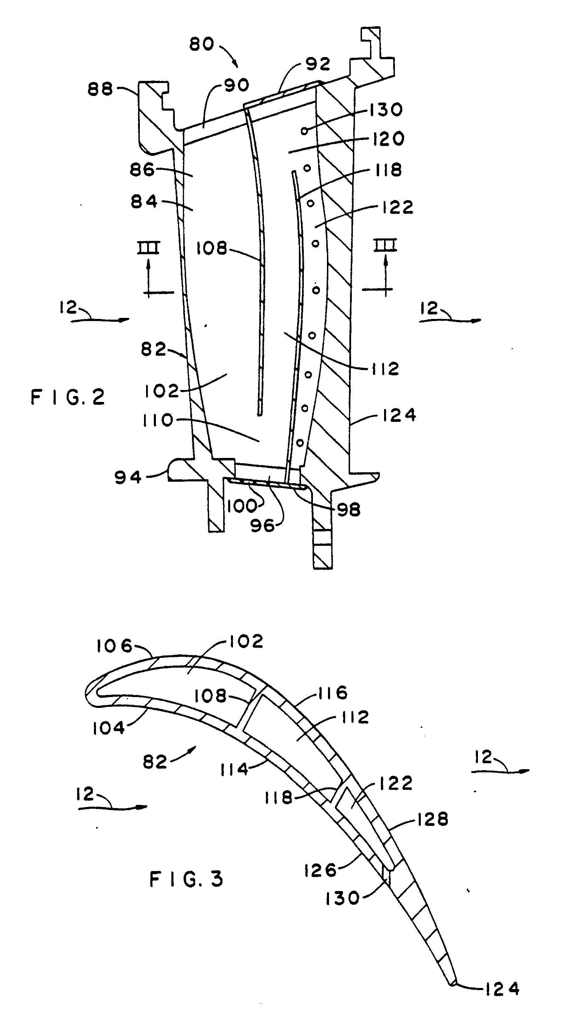

Figures 2 and 3 show a preferred cooled turbine vane 80 generally having an airfoil body 82 with a multipass channel 84 in its hollow interior 86 for maintaining turbulent coolant flow. The channel 84 is designed to obtain the best combination of high heat transfer and low pressure drop so that only minimum amounts of coolant need be supplied at the lowest practical pressures for maximizing overall turbine efficiency.

The vane 80 has an outer shroud 88 with an opening 90 partially covered by a closure plate 92 providing flow communication between the source of coolant and the hollow interior 86 of the airfoil body 82. The vane 80 also has an inner shroud 94 with an opening 96 covered by closure plate 98. The closure plate 98 has one or more holes 100 for providing a portion of the coolant in the hollow interior 86 of the airfoil body 82 to the seal housing 48 shown in Figure 1. As is most clearly seen in Figure 3, the multipass channel 84 comprises a first channel 102 spanning the length of the airfoil body 82, which is generally defined by the leading surface 104, 106 of the airfoil body and a first interior wall 108. The first interior wall 108 is integrally cast with the airfoil body 82 and extends from the closure plate 92 toward the inner shroud 94. An inner return bend 110 generally defined by the airfoil body 82 and the inner shroud 94 communicates with the first channel 102 and with an intermediate channel 112 generally defined by the first interior wall 108, the intermediate surfaces 114, 116 of the airfoil body 82 and a second interior wall 118. The second interior wall 118 extends from the inner shroud 94 toward the outer shroud 88 generally parallel to the first interior wall 108. An outer return bend 120 generally defined by the airfoil body 82, the outer shroud 88 and the first interior wall 108 communicates with the intermediate channel 112 and with a third channel 122 adjacent the trailing edge 124 of the airfoil body 82. The third channel 122 is generally defined by the trailing surfaces 126, 128 of the airfoil body 82 and the second interior wall 118. Ports 130 along the trailing edge 124 in the trailing surface 126 of the airfoil body provide flow communication between the third channel 118 and the high temperature gases flowing along path 12. The ports 130 are preferably closely spaced to maintain a film of coolant along the trailing surface.

As shown in Figure 2, the coolant outlet, such as hole 100 in the closure plate 98, is preferably located adjacent the return bend 110 at the end of the first channel 102. Although only a small portion of coolant fluid flows through the hole 100, this flow effectively reduces a zone of stagnant fluid in the boundary of the return bend 110. Thus there is better heat transfer into the coolant fluid in the return bend 110 and there is less pressure drop in the return bend 110. Similarly it is preferable to locate one or more ports 130 adjacent the return bend 120 leading into the subsequent channel 122 so that coolant fluid in the boundary areas of the bend can flow into the gases.

**Claims**

1. A cooled turbine vane (18, 80) for use in a multistage gas turbine (10) having rows of fluid cooled vanes radially extending from seal housings into the path of gases flowing generally axially through the turbine (10), the cooled turbine vane (18) having a hollow airfoil body (32) with ports (58) providing flow communication between its hollow interior (56) and the gas flow path (12), an outer shroud (34) with a coolant inlet (52) into the interior (56) of the airfoil body (32) providing flow communication with a source of coolant fluid, and an inner shroud (36) with a coolant fluid outlet (60) from the interior (56) of the airfoil body (32) providing flow communication with a seal housing (48), so as to permit some coolant to flow from the vane (18) through the ports (58) directly into the gas flow path (12) and some coolant to flow through the outlet (60) in the inner shroud (36), characterized in that the airfoil body (82) has in its interior (86) a multipass coolant fluid channel (84) comprising a first channel (102) extending along the leading surfaces (104, 106) of the airfoil body (82) from the inlet (90) in the outer shroud (88) to a return bend (110) defined by the airfoil body (82) and the inner shroud (94), and a subsequent channel (122) in fluid flow communication with the first channel (102) extending along the trailing surfaces (126, 128) of the airfoil body (82) in fluid flow communication with the ports (130).

2. A turbine vane (18, 80) according to claim 1, characterized in that the ports (130) are adjacent to the trailing edge (124) of the airfoil body (32).

3. A turbine vane (80) of claim 3 characterized in that the outlet (100) in the inner shroud (94) is adjacent the return bend (110) defined by the airfoil body (82) and the inner shroud (94) and the inlet (90) in the outer shroud (88) and the outlet (100) in the inner shroud (94) are aligned with the first channel (102).

4. A turbine vane (80) according to claim 3, characterized in that the first channel (102) is defined by the airfoil body (82) and an interior wall (108) extending from the outer shroud (88) in spaced relationship with the inner shroud (94).

5. A turbine vane (80) according to claim 4, characterized in that the airfoil body (82) has two subsequent channels (112, 122) separated by an interior wall (118) extending from the inner shroud (94) in spaced relationship with the outer shroud (88) whereby a return bend (120) communicating the second channel (112) and the third channel (122) is defined by the outer shroud (88) and the airfoil body (82) and wherein at least one port (130) communicating with the gas flow path (12) is disposed adjacent the return bend (120).

FIG. 1

F I G. 2

F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | US-A-3945758 (R.M.LEE)<br>* column 1, lines 25 - 68; figures 1-3 *<br>--- | 1-5 | F01D5/18<br>F01D11/00 |
| Y | CH-A-470575 (GENERAL ELECTRIC COMPANY)<br>* column 2, line 21 - column 3, line 5 *<br>* column 3, line 65 - column 4, line 6 *<br>* column 4, lines 38 - 55 *<br>* figures 1-3 *<br>--- | 1-5 | |
| A | GB-A-938247 (ROLLS-ROYCE LTD.)<br>* figure 2 *<br>--- | 3 | |
| A | GB-A-2163218 (ROLLS-ROYCE LTD.),<br>* page 1, lines 93 - 96; figures 2, 3 *<br>----- | 4, 5 | |

TECHNICAL FIELDS SEARCHED (Int. Cl.5 )

F01D

The present search report has been drawn up for all claims

| Place of search | Date of completion of the search | Examiner |
|---|---|---|
| THE HAGUE | 15 MAY 1990 | CRIADO Y JIMENEZ, F. |

EPO FORM 1503 03.82 (P0401)